(19)

Europäisches
Patentamt
European
Patent Office
Office européen
des brevets

(11) **EP 2 341 732 A1**

(12) **EUROPEAN PATENT APPLICATION**

(43) Date of publication:
**06.07.2011 Bulletin 2011/27**

(51) Int Cl.:
**H04W 36/22** *(2009.01)*    **H04W 72/04** *(2009.01)*

(21) Application number: **09180949.1**

(22) Date of filing: **30.12.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **Nokia Siemens Networks Oy
02610 Espoo (FI)**

(72) Inventors:
• **Stefanski, Szymon
  33-300, Nowy Sacz (PL)**
• **Kordybach, Krzysztof
  24-100, Pulawy (PL)**
• **Szufarska, Agnieszka
  80-299, Gdansk (PL)**

(54) **Methods, apparatuses and related computer program product for load estimation during a handover operation**

(57)    Methods, apparatuses and related computer program product for load estimation during a handover operation. It is disclosed a method (and related apparatus) comprising measuring a first signal strength from a handover source entity and a first signal interference, measuring a second signal strength from a handover target entity and a second signal interference, and transmitting the first and second signal strengths and the first and second signal interferences; and a method comprising receiving the first signal strength, the second signal strength and the first and second signal interferences, deriving an estimate of a second signal to interference plus noise ratio of the handover target entity based on the first and second signal strengths and a first signal to interference plus noise ratio of the handover source entity, and estimating a required amount of a communication resource based on the first second signal to interference plus noise ratio.

**Fig. 2**

**200**

**Description**

FIELD OF THE INVENTION

An example of the present invention relates to load estimation during a handover operation. More specifically, the example of the present invention relates to methods, apparatuses and a related computer program product for load estimation during a handover operation. The example of the present invention may be applicable e.g. to mobile wireless communications such as 3$^{rd}$ generation partnership project (3GPP) long-term evolution (LTE and LTE-Advanced) and may be related to load balancing (LB).

BACKGROUND

Load balancing in LTE may be achieved by means of handover (HO) of users from an overloaded cell to a cell which can accommodate additional load. The receiving cell might be adjacent e.g. in space (neighbor cells) and/or on a different frequency channel (inter-frequency LB). As this HO may need to be based on detailed and up-to-date knowledge of the radio environment, the HO is performed e.g. by an evolved nodeB (eNB) in LTE. The eNB may acquire knowledge of the load situation of adjacent cells e.g. via X2 load reports. Based on this knowledge, the eNB may need to estimate appropriate number of users that can be handed over to a target eNB (TeNB). Since users after the HO to TeNB may generate different load than before the HO at a source eNB (SeNB), this load should no exceed load reported as available by the TeNB.

There have been approaches dedicated to solve the above issues.

The problem of limited resources in TeNB may be solved e.g. by admission and congestion control mechanism. This solution, however, may increase the number of rejected LB HO requests, may increase the required time to achieve best load distribution by LB functionality and may increase unnecessary signaling overhead.

Another approach has been proposed. For some time, it has been considered that besides the composite available capacity that eNBs may exchange, also a cell capacity class value (CCCV) may be signaled. The CCCV would be set up by the operator and would correspond to the capacity of the cell as compared to other cells. For example, if a cell was assigned CCCV of 60 and its neighbor a CCCV of 50, then the cell may be able to estimate how much traffic fits into the neighbor before initializing LB procedure (e.g. it may be the number of physical resource blocks (PRBs) used by a given user in an own cell multiplied by a ratio of CCCVs of own and neighbor cells).

In consideration of the above, according to the example of the present invention, methods, apparatuses and a related computer program product for load estimation during a handover operation are provided.

In this connection, the examples of the present invention enable one or more of the following:

- Enabling a precise and easy-to-implement dynamic solution taking into account momentary variations of radio environment;
- Enabling a solution for both frequency division duplex (FDD) and time division duplex (TDD) technologies and for all kinds of mobile networks other than LTE;
- Providing a reliable method to estimate load;
- Avoiding attempts after a HO to submit for LB HO to many users and handover requests, so that they will not be rejected e.g. by admission and congestion control mechanism;
- Accelerating the total LB process;
- Avoiding dropping of LB processes due to insufficient quality.

BRIEF DESCRIPTION OF THE DRAWINGS

The example of the present invention is described herein below with reference to the accompanying drawings, in which:

Fig. 1 shows a principle underlying the example of the present invention;

Fig. 2 shows methods for load estimation during a handover operation according to the example of the present invention;

Fig. 3 shows apparatuses for load estimation during a handover operation according to the example of the present invention;

Fig. 4 shows an example function for mapping a signal to interference plus noise ratio (SINR) to a throughput; and

Fig. 5 shows an example of a required load estimation error.

DETAILED DESCRIPTION OF THE EXAMPLE OF THE PRESENT INVENTION

The example of the present invention is described herein below by way of example with reference to the accompanying drawings.

It is to be noted that for this description, the term "physical resource block" is an example for "communication resource", respectively, without restricting the latter-named term to the special technical or implementation details imposed to the first-named term.

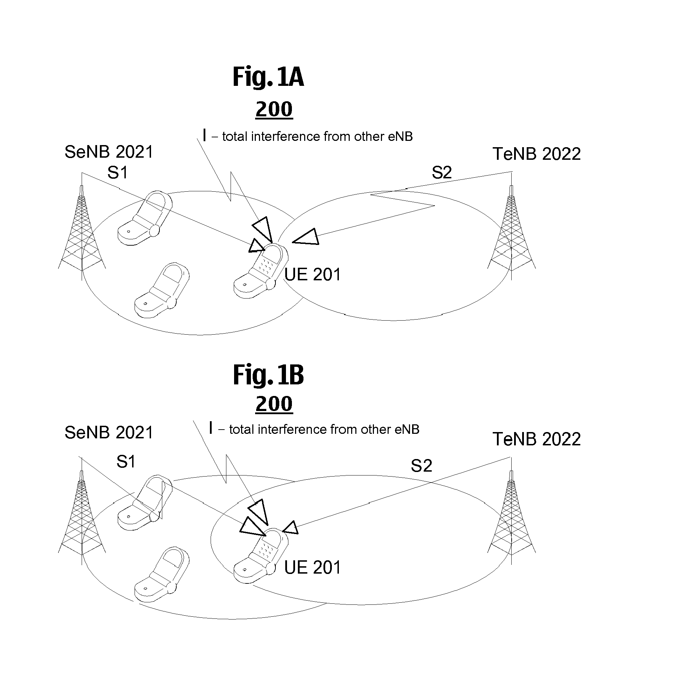

Fig. 1 shows a principle underlying the example of the present invention. As shown in Figs. 1A and 1B, a communication system 200 may comprise a plurality of user equipments (UEs) 201, a source eNB 2021 and a target eNB 2022, the terms "target" and "source" relating e.g. to a handover relationship between the eNBs 2021, 2022.

Before a LB HO, the user may be connected (using e.g. reference signal received power (RSRP) measurement) to the SeNB 2021 with the strongest signal (e.g. signal S1 in Fig. 1A). The signal received from the TeNB 2022 (e.g. signal S2 in Fig. 1A) and other eNBs (represented by I in Fig. 1A) may be components of interference.

After HO e.g. to a neighbor cell, the received signal S1 from previously serving SeNB 2021 now belongs to the interference group of signals (see Fig. 1B) and the signal S2 from the TeNB 2022 starts to be a serving signal.

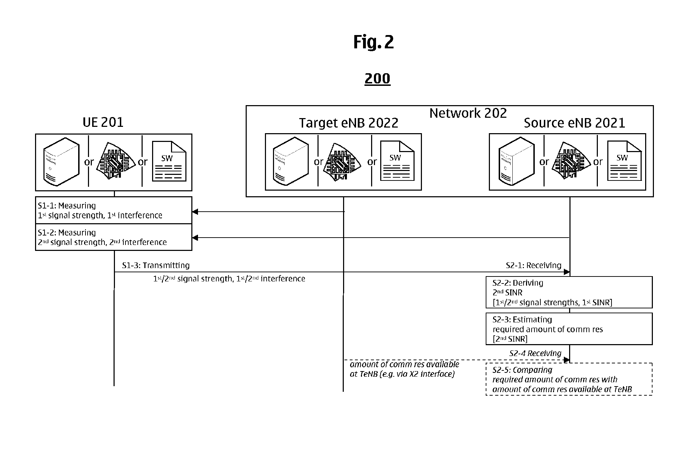

Fig. 2 shows the methods for load estimation during a handover operation according to the example of the present invention. Signaling between elements may be indicated in horizontal direction, while time aspects between signaling may be reflected in the vertical arrangement of the signaling sequence as well as in the sequence numbers. It is to be noted that the time aspects indicated in Fig. 2 do not necessarily restrict any one of the method steps shown to the step sequence outlined. This applies in particular to method steps that are functionally disjunctive with each other. Within Fig. 2, for ease of description, means or portions which may provide main functionalities are depicted with solid functional blocks or arrows and/or a normal font, while means or portions which may provide optional functions are depicted with dashed functional blocks or arrows and/or an italic font.

As shown in Fig. 2, the communication system 200 may comprise the UE 201 and a network 202. In turn, the network 202 may further comprise the source eNB 2021 and the target eNB 2022, the terms "target" and "source" relating e.g. to the handover relationship between the eNBs 2021, 2022.

As shown in Fig. 2, in step 1-1, e.g. the UE 201 may perform measuring a first signal strength (e.g. denoted by S1 in Fig. 1A) from a handover source entity (e.g. SeNB 2021) and a first signal interference (e.g. denoted by I+S2 in Fig. 1A) .

In step S1-2, e.g. the UE 201 may perform measuring a second signal strength (e.g. denoted by S2 in Fig. 1B) from a handover target entity (e.g. TeNB 2022) and a second signal interference (e.g. denoted by I+S1 in Fig. 1B).

And, in step S1-3, e.g. the UE 201 may perform transmitting the first and second signal strengths and the first and second signal interferences (e.g. from the UE 201 to the TeNB 2022). Accordingly, in step S2-1, e.g. the SeNB 2012 may perform receiving the first signal strength (e.g. denoted by S1 in Fig. 1A) of the handover source entity (e.g. SeNB 2021), the second signal strength (e.g. denoted by S2 in Fig. 1B) of the handover target entity (e.g. TeNB 2022) and the first and second signal interferences.

Then, in step S2-2, e.g. the SeNB 2012 may perform deriving an estimate of a second signal to interference plus noise ratio of the handover target entity based on the first and second signal strengths and a first signal to interference plus noise ratio of the handover source entity (e.g. SeNB 2021).

And, in step S2-3, e.g. the SeNB 2012 may perform estimating a required amount of a communication resource (e.g. PRBs) based on the second signal to interference plus noise ratio.

As for developments pertaining to the SeNB 2012, the deriving may be performed according to the following equation:

$$SINR_{TeNB} = \frac{S_2}{\dfrac{S_1}{SINR_{SeNB}} + S_1 - S_2}$$

where $SINR_{TeNB}$ is the second signal to interference plus noise ratio, $SINR_{SeNB}$ is the first signal to interference plus noise ratio, $S_1$ is the first signal strength and $S_2$ is the second signal strength. Furthermore, the estimating may be performed by using a function mapping the required amount of the communication resource against the second signal to interference plus noise ratio. In this case, the function may be a truncated Shannon method. Further in this case, the truncated Shannon method may be performed according to the following equation:

$$N_{PRB,req} = \frac{Thr_{req}}{Thr(SINR)*180}$$

where $N_{PRB,req}$ is the required amount of the communication resource expressed as number of physical resource blocks in the downlink, $Thr_{req}$ is a throughput required by a user, 180 is a transmission bandwidth of one physical resource block in kHz and $Thr(SINR)$ is an achievable throughput for a given second signal to interference plus noise ratio in bit/(Hz·s).

In an optional step S2-4, e.g. the SeNB 2021 may perform receiving (e.g. from the TeNB 2022 e.g. via an X2 interface) an amount of the communication resource available at the handover target entity.

Finally, in an optional step S2-5, e.g. the SeNB 2012 may perform comparing the required amount of the communication resource with the amount of the communication resource available at the handover target entity.

As for developments pertaining to the UE 201, the measured first signal interference may comprise the second signal strength as interference. Further, the measured second signal interference may comprise the first signal strength as interference.

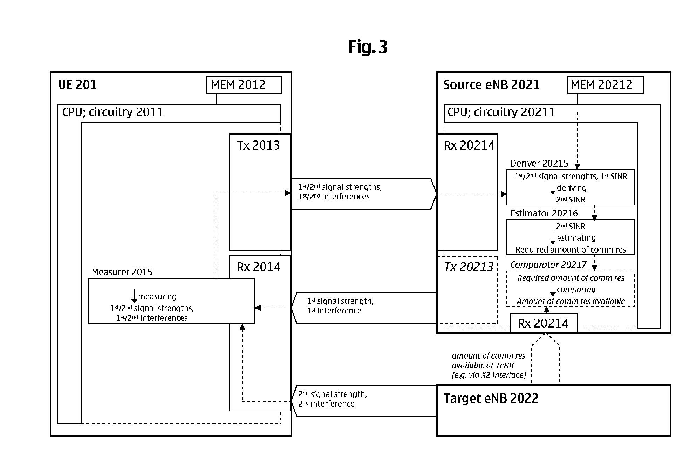

Fig. 3 shows apparatuses (e.g. the UE 201 and the source eNB 2012) for load estimation during a handover operation according to the example of the present invention. Within Fig. 3, for ease of description, means or portions which may provide main functionalities are depicted with solid functional blocks or arrows and/or a normal font, while means or portions which may provide optional functions are depicted with dashed functional blocks or arrows and/or an italic font.

The UE 201 may comprise a CPU (or circuitry) 2011, a memory 2012, a transmitter (or means for transmitting) 2013, a receiver (or means for receiving) 2014 and a measurer (or means for measuring) 2015.

The source eNB 2012 may comprise a CPU (or circuitry) 20211, a memory 20212, an optional transmitter (or means for transmitting) 20213, a receiver (or means for receiving) 20214, a deriver (or means for deriving) 20215, an estimator (or means for estimating) 20216 and an optional comparator (or means for comparing) 20217.

For reasons of descriptive briefness, the internal structure of the target eNB 2022 is not explicitly shown in Fig. 3. However, it is to be noted that the target eNB 2022 may have the same or similar structure as the source eNB 2021.

As indicated by the dashed extensions of the functional blocks of the CPU 2011 or 20211, the means for measuring 2015, the means for deriving 20215, the means for estimating 20216 and the means for comparing 20217 (and the means for transmitting 2013 and means for receiving 2014 of the UE 201 as well as the means for transmitting 20213 and means for receiving 20214 of the SeNB 2021) may be functionalities running on the CPU 2011 or 20211 of the UE 201 and the SeNB 2021, or may alternatively be separate functional entities or means. Further, as shown by the functional blocks of the means for measuring 2015 and the means for receiving 2014 of the UE 201 overlapping each other, the means for measuring may make use of the functionalities inherent to the means for receiving 2014.

The CPUs 20x1 (wherein x = 1 and/or 21) may respectively be configured, for example by software residing in the memory 20x2, to process various data inputs and to control the functions of the memories 20x2, the means for transmitting 202x3 and the means for receiving 20x4 (as well as the means for measuring 2015 of the UE 201 and the means for deriving 20215, the means for estimating 20216 and the means for comparing 20217 of the source eNB 2021). The memories 20x2 may serve e.g. for storing code means for carrying out e.g. the methods according to the example of the present invention, when run e.g. on the CPUs 20x1. It is to be noted that the means for transmitting 20x3 and the means for receiving 20x4 may alternatively be provided as respective integral transceivers. It is further to be noted that the transmitters/receivers may be implemented i) as physical transmitters/receivers for transceiving e.g. via the air interface (e.g. between the UE 201 and the SeNB 2021), ii) as routing entities e.g. for transmitting/receiving data packets e.g. in a PS (packet switching) network (e.g. between the source eNB 2021 and the target eNB 2022 when disposed as separate network entities), iii) as functionalities for writing/reading information into/from a given memory area (e.g. in case of shared/common CPUs or memories e.g. of the source eNB 2021 and the target eNB 2022 when disposed as an integral network entity), or iv) as any suitable combination of i) to iii).

As shown in Fig. 3, e.g. the means for measuring 2015 of the UE 201 may perform measuring a first signal strength (e.g. denoted by S1 in Fig. 1A) from a handover source entity (e.g. SeNB 2021) and a first signal interference (e.g. denoted by I+S2 in Fig. 1A).

For example, the means for measuring 2015 of the UE 201 may perform measuring a second signal strength (e.g. denoted by S2 in Fig. 1B) from a handover target entity (e.g. TeNB 2022) and a second signal interference (e.g. denoted by I+S1 in Fig. 1B).

And, e.g. the means for transmitting 2013 of the UE 201 may perform transmitting the first and second signal strengths and the first and second signal interferences (e.g. from the UE 201 to the TeNB 2022). Accordingly, e.g. the means for receiving 20214 of the SeNB 2021 may perform receiving the first signal strength (e.g. denoted by S1 in Fig.

1A) of the handover source entity (e.g. SeNB 2021), the second signal strength (e.g. denoted by S2 in Fig. 1B) of the handover target entity (e.g. TeNB 2022) and the first and second signal interferences.

Then, e.g. the means for deriving 20215 of the SeNB 2021 may perform deriving an estimate of a second signal to interference plus noise ratio of the handover target entity based on the first and second signal strengths and a first signal to interference plus noise ratio of the handover source entity (e.g. SeNB 2021).

And, e.g. the means for estimating 20216 of the SeNB 2021 may perform estimating a required amount of a communication resource (e.g. PRBs) based on the second signal to interference plus noise ratio.

As for developments pertaining to the TeNB 2022, the means for deriving may be configured to perform according to the following equation:

$$SINR_{TeNB} = \frac{S_2}{\dfrac{S_1}{SINR_{SeNB}} + S_1 - S_2}$$

where $SINR_{TeNB}$ is the second signal to interference plus noise ratio, $SINR_{SeNB}$ is the first signal to interference plus noise ratio, $S_1$ is the first signal strength and $S_2$ is the second signal strength. Furthermore, the means for estimating may be configured to perform by using a function mapping the required amount of the communication resource against the second signal to interference plus noise ratio. In this case, the function may be a truncated Shannon method. Further in this case, the truncated Shannon method may be performed according to the following equation:

$$N_{PRB,req} = \frac{Thr_{req}}{Thr(SINR) * 180}$$

where $N_{PRB,req}$ is the required amount of the communication resource expressed as number of physical resource blocks in the downlink, $Thr_{req}$ is a throughput required by user, 180 is a transmission bandwidth of one physical resource block in kHz and $Thr(SINR)$ is an achievable throughput for a given second signal to interference plus noise ratio in bit/(Hz·s).

Optionally, e.g. the means for receiving 20214 of the SeNB 2021 may perform receiving (e.g. from the TeNB 2022 e.g. via an X2 interface) an amount of the communication resource available at the handover target entity.

Finally, e.g. the means for comparing 20217 of the SeNB 2021 may perform comparing the amount of the required communication resource with the amount of the communication resource available at the handover target entity.

As for developments pertaining to the UE 201, the measured first signal interference may comprise the second signal strength as interference. Further, the measured second signal interference may comprise the first signal strength as interference.

Furthermore, at least one of, or more of the above-described means for measuring 2015, means for transmitting 2013, means for receiving 20214, means for deriving 20215, means for estimating 20216 and means for comparing 20217 as well as the UE 201 and the source eNB 2021, or the respective functionalities carried out, may be implemented as a chipset, module or subassembly.

Finally, the example of present invention also relates to a system which may comprise the UE 201, the source eNB 2021 and optional the target eNB 2022 according to the above-described example of the present invention.

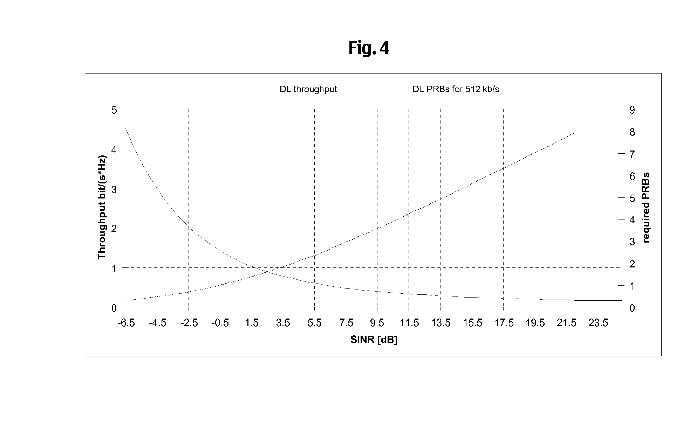

Fig. 4 shows an example function for mapping a signal to interference plus noise ratio (SINR) to a throughput, e.g. required PRBs for transmission of 512 kb/s in a downlink (DL) as a function of SINR and 10 MHz bandwidth.

The number of required PRBs $N_{PRB,req}$ may be determined according to the following equation:

$$N_{PRB,req} = \frac{Thr_{req}}{Thr(SINR) * 180} ,$$

where $Thr_{req}$ is a throughput required by a user, 180 is the transmission bandwidth of 1 PRB in kHz and $Thr(SINR)$ is an achievable throughput for a given SINR in bit/(Hz·s).

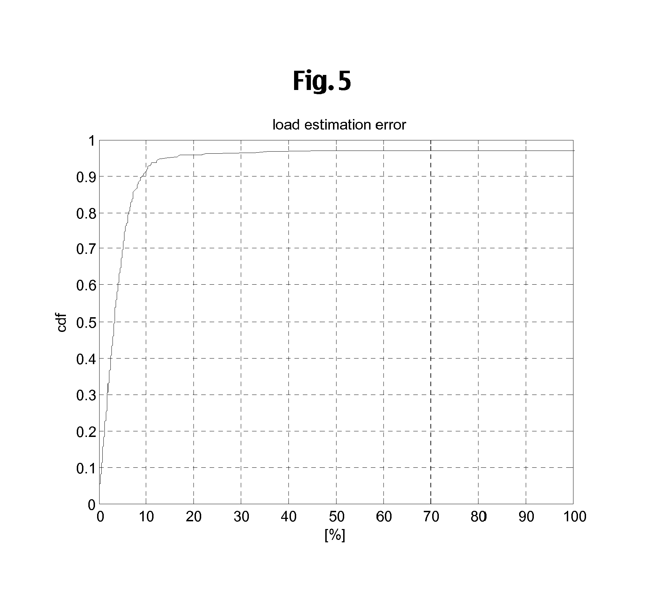

Fig. 5 shows an example of a required load estimation error, wherein the abscissa shows the required load estimation error in percent, while the ordinate shows the cumulative density function (cdf) of the required load estimation error.

The estimation algorithm according to the example of the present invention may rely also on measurements reported from the UEs (e.g. framework of a radio resource controller (RRC)). The precision of the example of the present invention is still sufficient in case of using a standardized reporting method.

The above-described load estimation mechanism according to the example of the present invention may be implemented in the eNB. The needed measurements may be done by a UE. The gains from the implementation of the example of the present invention would be noticeable in the reduction of signaling overhead by reduction of rejected HO requests and reduce time required for load distribution by the LB mechanism.

An implementation example may be performed by way of simulation according to the following scenario:

| | |
|---|---|
| Network Layout: | hexagonal 19 sites, 3 sectors per site; |
| Users drop: | 10 users equally distributed in every cell, 40 users in hotspot moving across the network; |
| Users mobility: | 3 km/h; |
| Traffic model: | current bit rat (CBR) 512 kbps; |
| Throughput mapping: | bounded Shannon |
| Shadowing: | standard deviation 8 dB |

The investigated performance metric is:

$$load\_estimation\_error_n = \left( \frac{\left| load\_estimated_{SeNB,n-1} - load\_required_{TeNB,n} \right|}{load\_estimated_{SeNB,n-1}} \right) \cdot 100$$

where

$load\_estimated_{SeNB,n-1}$ is an estimated SeNB load after LB HO in a previous iteration;

$load\_required_{TeNB,n}$ is a required load after LB HO in the current iteration.

As shown in Fig. 5, in the implementation example of the present invention, for 90 % of cases of load estimations after LB HO, the occurred difference between required and estimated load was less than 10%.

The example implementation of the present invention may use a so-called bounded Shannon method as a throughput mapping function, but additional metrics may be added regarding the eNB specific link adaptation characteristics that may include an additional relation between the SINR and the required load.

Without being restricted to the details following in this section, the examples of the present invention may be summarized as follows:

The example of the present invention introduces a method of load estimation after LB HO which may be based on SINR prediction and load curves.

Signal attenuation coming from the distance between the UE and the eNB may be a main component of pathloss and slow fading (shadowing) and may also be included in received signals measurements. Fast fading effects may not be predicted and may cause received signal fluctuations. It may be assumed that during the short period of time that a HO needs to be executed, a user's position does not change significantly and that there are no relevant changes of signal powers received by the UE.

The signal strength $S_2$ received from the TeNB can be excluded from total interference and the equation of the downlink SINR before HO can be written as $SINR_{SeNB}$, and the signal strength $S_1$ received from SeNB may also be excluded from the total interference (after HO), and the equation of the downlink SINR after HO can be written as $SINR_{TeNB}$

$$SINR_{SeNB} = \frac{S_1}{N + I + S_2} \qquad\qquad SINR_{TeNB} = \frac{S_2}{N + I + S_1}$$

From the above equations, the estimation of $SINR_{TeNB}$ at TeNB after HO can be derived, which include only relation between serving signal, signal received from TeNB, $SINR_1$ which are known for SeNB and can be expressed as below:

$$SINR_{TeNB} = \frac{S_2}{\dfrac{S_1}{SINR_{SeNB}} + S_1 - S_2}$$

The number of required PRBs after LB HO can be estimated using SINR to throughput mapping functions, an example of which is shown in Fig. 4, e.g. the truncated Shannon method.

The number of required PRBs at the TeNB can then be compared to the number of PRBs available for LB, as signaled by the TeNB.

The example of the present invention may consist of the above-described algorithm to calculate automatically the amount of resources needed at the target for LB purposes. Further, the example of the present invention may comprise the following steps:

- UE reports to SeNB signal strength S1, S2 and I;
- SeNB receives, e.g. over X2, information about available resources at TeNB;
- SeNB estimates SINR after HO and load;
- SeNB takes decision about number of users (and estimated load) and performs HO to TeNB (this amount of load should not exceed available resources at TeNB).

[Further examples]

For the purpose of the present invention as described herein above, it should be noted that

- a circuitry may refer to at least one of, or hybrids of the following:

    (a) to pure hardware circuit implementations (such as implementations purely in analog and/or digital circuitry), and
    (b) to combinations of circuits and software (and/or firmware), such as (as applicable):

        (i) a combination of processor(s), or
        (ii) portions of processor(s)/software (including digital signal processor(s)), software and memory (or memories) that work together to cause an apparatus as defined hereinabove to perform various functions, and

    (c) to circuits, such as (micro)processor(s) or a portion of (a) (micro)processor(s) that require software and/or firmware for operation even if the software or firmware is not physically present;

- a processor may be any processing unit, such as CPU, arithmetic and logic unit (ALU), microprocessor unit (MPU), digital signal processor (DSP) etc., be it a single core processor, dual core processor or multi-core processor;
- a program may be embodied by or on any computer program (product), computer readable medium, processor(s), memory (or memories), circuitry, circuits, random access memory (RAM), read-only memory (ROM) and/or data structure(s), be it e.g. as compiled/non-compiled program (source) code, executable object, (meta)file or the like;
- an access technology may be any technology by means of which a user equipment can access an access network (or base station, respectively). Any present or future technology, such as WiMAX (Worldwide Interoperability for Microwave Access) or WLAN (Wireless Local area Network), BlueTooth, Infrared, and the like may be used; although the above technologies are mostly wireless access technologies, e.g. in different radio spectra, access technology in the sense of the present invention may also imply wirebound technologies, e.g. IP based access technologies like cable networks or fixed line.

- a network may be any device, unit or means by which a station entity or other user equipment may connect to and/or utilize services offered by the access network; such services include, among others, data and/or (audio-) visual communication, data download etc.;
- generally, the present invention may be applicable in those network/user equipment environments relying on a data packet based transmission scheme according to which data are transmitted in data packets and which are, for example, based on the internet protocol (IP). The present invention is, however, not limited thereto, and any other present or future IP or mobile IP (MIP) version, or, more generally, a protocol following similar principles as (M) IPv4/6, is also applicable;
- a user equipment may be any device, unit or means by which a system user may experience services from an access network;
- method steps likely to be implemented as software code portions and being run using a processor at a network element or terminal (as examples of devices, apparatuses and/or modules thereof, or as examples of entities including apparatuses, circuitries and/or modules therefore), are software code independent and can be specified using any known or future developed programming language as long as the functionality defined by the method steps is preserved;
- generally, any method step is suitable to be implemented as software or by hardware without changing the idea of the invention in terms of the functionality implemented;
- method steps and/or devices, units or means likely to be implemented as hardware components at the above-defined apparatuses, or any module(s)/circuitry(ies) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may alternatively be based on any security architecture capable e.g. of authentication, authorization, keying and/or traffic protection;
- devices, units, circuitries or means (e.g. the above-defined apparatuses, or any one of their respective means) can be implemented as individual devices, units or means, but this does not exclude that they are implemented in a distributed fashion throughout the system, as long as the functionality of the device, unit. circuitry or means is preserved;
- an apparatus may be represented by a semiconductor chip, a chipset, a (hardware) module comprising such chip or chipset, or a circuitry; this, however, does not exclude the possibility that a functionality of an apparatus, module or circuitry, instead of being hardware implemented, be implemented as software in a (software) module such as a computer program or a computer program product comprising executable software code portions for execution/ being run on a processor;
- a device may be regarded as an apparatus or as an assembly of more than one apparatus, whether functionally in cooperation with each other or functionally independently of each other but in a same device housing, for example.

According to an example of the present invention, in a first aspect, this object is for example achieved by **a method** comprising:

receiving a first signal strength of a handover source entity, a second signal strength of a handover target entity and first and second signal interferences;
deriving an estimate of a second signal to interference plus noise ratio of the handover target entity based on the first and second signal strengths and a first signal to interference plus noise ratio of the handover source entity; and
estimating a required amount of a communication resource based on the second signal to interference plus noise ratio.

According to further refinements of the example of the present invention as defined under the above first aspect,

- the deriving is performed according to the following equation:

$$SINR_{TeNB} = \frac{S_2}{\dfrac{S_1}{SINR_{SeNB}} + S_1 - S_2}$$

where SINR$_{TeNB}$ is the second signal to interference plus noise ratio, SINR$_{SeNB}$ is the first signal to interference plus noise ratio, S$_1$ is the first signal strength and S$_2$ is the second signal strength;

- the estimating is performed by using a function mapping the required amount of the communication resource against the second signal to interference plus noise ratio;
- the function is a truncated Shannon method;
- the truncated Shannon method is performed according to the following equation:

$$N_{PRB,req} = \frac{Thr_{req}}{Thr(SINR)*180}$$

where $N_{PRB,req}$ is the required amount of the communication resource expressed as number of physical resource blocks in the downlink, $Thr_{req}$ is a throughput required by a user, 180 is a transmission bandwidth of one physical resource block in kHz and $Thr(SINR)$ is an achievable throughput for a given second signal to interference plus noise ratio in bit/(Hz·s);
- wherein the method further comprises receiving an amount of the communication resource available at the handover target entity, and comparing the required amount of the communication resource with the amount of the communication resource available at the handover target entity.

According to an example of the present invention, in a second aspect, this object is for example achieved by **a method** comprising:

measuring a first signal strength from a handover source entity and a first signal interference;
measuring a second signal strength from a handover target entity and a second signal interference; and
transmitting the first and second signal strengths and the first and second signal interferences.

According to further refinements of the example of the present invention as defined under the above second aspect,

- the measured first signal interference comprises the second signal strength as interference;
- the measured second signal interference comprises the first signal strength as interference.

According to an example of the present invention, in a third aspect, this object is for example achieved by **an apparatus** comprising:

means for receiving a first signal strength of a handover source entity, a second signal strength of a handover target entity and first and second signal interferences;
means for deriving an estimate of a second signal to interference plus noise ratio of the handover target entity based on the first and second signal strengths and a first signal to interference plus noise ratio of the handover source entity; and
means for estimating a required amount of a communication resource based on the second signal to interference plus noise ratio.

According to further refinements of the example of the present invention as defined under the above third aspect,

- the means for deriving is configured to perform according to the following equation:

$$SINR_{TeNB} = \frac{S_2}{\dfrac{S_1}{SINR_{SeNB}} + S_1 - S_2}$$

where SINR$_{TeNB}$ is the second signal to interference plus noise ratio, SINR$_{SeNB}$ is the first signal to interference plus noise ratio, S$_1$ is the first signal strength and S$_2$ is the second signal strength;

- the means for estimating is configured to perform by using a function mapping the required amount of the communication resource against the second signal to interference plus noise ratio;
- the function is a truncated Shannon method;
- the truncated Shannon method is performed according to the following equation:

$$N_{PRB,req} = \frac{Thr_{req}}{Thr(SINR) * 180}$$

where $N_{PRB,req}$ is the required amount of the communication resource expressed as number of physical resource blocks in the downlink, $Thr_{req}$ is a throughput required by a user, 180 is a transmission bandwidth of one physical resource block in kHz and $Thr(SINR)$ is an achievable throughput for a given second signal to interference plus noise ratio in bit/(Hz·s);
- wherein the apparatus further comprises means for receiving an amount of the communication resource available at the handover target entity, and means for comparing the required amount of the communication resource with the amount of the communication resource available at the handover target entity;
- the apparatus is constituted by a handover source evolved NodeB.

According to an example of the present invention, in a fourth aspect, this object is for example achieved by **an apparatus** comprising:

means for measuring a first signal strength from a handover source entity and a first signal interference, and for measuring a second signal strength from a handover target entity and a second signal interference; and
means for transmitting the first and second signal strengths and the first and second signal interferences.

According to further refinements of the example of the present invention as defined under the above fourth aspect,

- the measured first signal interference comprises the second signal strength as interference;
- the measured second signal interference comprises the first signal strength as interference;
- the apparatus is constituted by a user equipment;
- at least one, or more of means for receiving, means for deriving, means for estimating, means for measuring, means for transmitting, means for comparing and the apparatus is implemented as a chipset, module or subassembly.

According to an example of the present invention, in a fifth aspect, this object is for example achieved by **an apparatus** comprising:

a receiver configured to receive a first signal strength of a handover source entity, a second signal strength of a handover target entity and first and second signal interferences;
a deriver configured to derive an estimate of a second signal to interference plus noise ratio of the handover target entity based on the first and second signal strengths and a first signal to interference plus noise ratio of the handover source entity; and
an estimator configured to estimate a required amount of a communication resource based on the second signal to interference plus noise ratio.

According to further refinements of the example of the present invention as defined under the above fifth aspect,

- the deriver is configured to perform according to the following equation:

$$SINR_{TeNB} = \frac{S_2}{\dfrac{S_1}{SINR_{SeNB}} + S_1 - S_2}$$

where SINR$_{TeNB}$ is the second signal to interference plus noise ratio, SINR$_{SeNB}$ is the first signal to interference plus noise ratio, S$_1$ is the first signal strength and S$_2$ is the second signal strength;

- the estimator is configured to perform by using a function mapping the required amount of the communication resource against the second signal to interference plus noise ratio;
- the function is a truncated Shannon method;
- the truncated Shannon method is performed according to the following equation:

$$N_{PRB,req} = \frac{Thr_{req}}{Thr(SINR)*180}$$

where $N_{PRB,req}$ is the required amount of the communication resource expressed as number of physical resource blocks in the downlink, $Thr_{req}$ is a throughput required by a user, 180 is a transmission bandwidth of one physical resource block in kHz and $Thr(SINR)$ is an achievable throughput for a given second signal to interference plus noise ratio in bit/(Hz·s);

- wherein the apparatus further comprises a receiver configured to receive an amount of the communication resource available at the handover target entity, and a comparator configured to compare the required amount of the communication resource with the amount of the communication resource available at the handover target entity;
- the apparatus is constituted by a handover source evolved NodeB.

According to an example of the present invention, in a sixth aspect, this object is for example achieved by **an apparatus** comprising:

a measurer configured to measure a first signal strength from a handover source entity and a first signal interference, and to measure a second signal strength from a handover target entity and a second signal interference; and
a transmitter configured to transmit the first and second signal strengths and the first and second signal interferences.

According to further refinements of the example of the present invention as defined under the above sixth aspect,

- the measured first signal interference comprises the second signal strength as interference;
- the measured second signal interference comprises the first signal strength as interference;
- the apparatus is constituted by a user equipment;
- at least one, or more of a receiver, a deriver, an estimator, a measurer, a transmitter, a comparator and the apparatus is implemented as a chipset, module or subassembly.

According to an example of the present invention, in a seventh aspect, this object is for example achieved by **a computer program product** comprising code means for performing a method according to the above first and second aspects when run on a processing means or module.

According to an example of the present invention, in an eighth aspect, this object is for example achieved by **a computer program** configured to, when run on a processing means or module, a method comprising:

receiving a first signal strength of a handover source entity, a second signal strength of a handover target entity and first and second signal interferences;
deriving an estimate of a second signal to interference plus noise ratio of the handover target entity based on the first and second signal strengths and a first signal to interference plus noise ratio of the handover source entity; and
estimating a required amount of a communication resource based on the second signal to interference plus noise ratio.

According to an example of the present invention, in a ninth aspect, this object is for example achieved by **a computer program** configured to, when run on a processing means or module, a method comprising:

measuring a first signal strength from a handover source entity and a first signal interference;
measuring a second signal strength from a handover target entity and a second signal interference; and
transmitting the first and second signal strengths and the first and second signal interferences..

According to an example of the present invention, in a tenth aspect, this object is for example achieved by **a system** comprising:

an apparatus according to the above third or fifth aspects; and
an apparatus according to the above fourth or sixth aspects.

Although the present invention has been described herein before with reference to particular embodiments thereof, the present invention is not limited thereto and various modification can be made thereto.

**Claims**

1.  A method, comprising:

    receiving a first signal strength of a handover source entity, a second signal strength of a handover target entity and first and second signal interferences;
    deriving an estimate of a second signal to interference plus noise ratio of the handover target entity based on the first and second signal strengths and a first signal to interference plus noise ratio of the handover source entity; and
    estimating a required amount of a communication resource based on the second signal to interference plus noise ratio.

2.  The method according to claim 1, wherein the deriving is performed according to the following equation:

$$SINR_{TeNB} = \frac{S_2}{\frac{S_1}{SINR_{SeNB}} + S_1 - S_2}$$

where $SINR_{TeNB}$ is the second signal to interference plus noise ratio, $SINR_{SeNB}$ is the first signal to interference plus noise ratio, $S_1$ is the first signal strength and $S_2$ is the second signal strength.

3.  The method according to claim 1 or 2, wherein the estimating is performed by using a function mapping the required amount of the communication resource against the second signal to interference plus noise ratio.

4.  The method according to claim 3, wherein the function is a truncated Shannon method.

5.  The method according to claim 4, wherein the truncated Shannon method is performed according to the following equation:

$$N_{PRB,req} = \frac{Thr_{req}}{Thr(SINR) * 180}$$

where $N_{PRB,req}$ is the required amount of the communication resource expressed as number of physical resource blocks in the downlink, $Thr_{req}$ is a throughput required by a user, 180 is a transmission bandwidth of one physical resource block in kHz and $Thr(SINR)$ is an achievable throughput for a given second signal to interference plus noise ratio in bit/(Hz·s).

6.  The method according to any one of claims 1 to 5, further comprising:

    receiving an amount of the communication resource available at the handover target entity; and
    comparing the required amount of the communication resource with the amount of the communication resource available at the handover target entity.

7.  A method, comprising:

measuring a first signal strength from a handover source entity and a first signal interference;
measuring a second signal strength from a handover target entity and a second signal interference; and
transmitting the first and second signal strengths and the first and second signal interferences.

**8.** The method according to claim 7, wherein the measured first signal interference comprises the second signal strength as interference.

**9.** The method according to claim 7, wherein the measured second signal interference comprises the first signal strength as interference.

**10.** An apparatus, comprising:

means for receiving a first signal strength of a handover source entity , a second signal strength of a handover target entity and first and second signal interferences;
means for deriving an estimate of a second signal to interference plus noise ratio of the handover target entity based on the first and second signal strengths and a first signal to interference plus noise ratio of the handover source entity; and
means for estimating a required amount of a communication resource based on the second signal to interference plus noise ratio.

**11.** The apparatus according to any one of claims 10 to 15, wherein the apparatus is constituted by a handover source evolved NodeB.

**12.** An apparatus, comprising:

means for measuring a first signal strength from a handover source entity and a first signal interference, and for measuring a second signal strength from a handover target entity and a second signal interference; and
means for transmitting the first and second signal strengths and the first and second signal interferences.

**13.** The apparatus according to claim 12, wherein the apparatus is constituted by a user equipment.

**14.** The apparatus according to any one of claims 10 to 13, wherein at least one, or more of means for receiving, means for deriving, means for estimating, means for measuring, means for transmitting, means for comparing and the apparatus is implemented as a chipset, module or subassembly.

**15.** A computer program product comprising code means for performing a method according to any one of claims 1 to 9 when run on a processing means or module.

## Fig. 1A

**200**

I – total interference from other eNB

SeNB 2021

S1

TeNB 2022

S2

UE 201

## Fig. 1B

**200**

I – total interference from other eNB

SeNB 2021

S1

TeNB 2022

S2

UE 201

# Fig. 2

## 200

UE 201          Network 202

Target eNB 2022          Source eNB 2021

S1-1: Measuring
$1^{st}$ signal strength, $1^{st}$ interference

S1-2: Measuring
$2^{nd}$ signal strength, $2^{nd}$ interference

S1-3: Transmitting
$1^{st}/2^{nd}$ signal strength, $1^{st}/2^{nd}$ interference

S2-1: Receiving

S2-2: Deriving
$2^{nd}$ SINR
[$1^{st}/2^{nd}$ signal strengths, $1^{st}$ SINR]

S2-3: Estimating
required amount of comm res
[$2^{nd}$ SINR]

S2-4 Receiving

amount of comm res available
at TeNB (e.g. via X2 interface)

S2-5: Comparing
required amount of comm res with
amount of comm res available at TeNB

## Fig. 3

## Fig. 4

# Fig. 5

load estimation error

Europäisches
Patentamt

European
Patent Office

Office européen
des brevets

# EUROPEAN SEARCH REPORT

**Application Number**

EP 09 18 0949

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/046665 A1 (ROBSON JULIUS [FR] ET AL) 19 February 2009 (2009-02-19) <br> * paragraph [0011] - paragraph [0013] * <br> * paragraph [0014] * <br> * paragraph [0027] * <br> * paragraph [0028] * <br> * paragraph [0032] * <br> * paragraph [0047] * <br> * paragraph [0057] - paragraph [0059] * <br> ----- | 1-15 | INV. H04W36/22 <br><br> ADD. H04W72/04 |
| A | WO 2008/031258 A1 (HUAWEI TECH CO LTD [CN]; JOHANSSON JOHAN [SE]) 20 March 2008 (2008-03-20) <br> * page 9, line 13 - line 21 * <br> * page 10, line 5 - line 17 * <br> * page 11, line 13 - line 26 * <br> * page 12, line 23 - page 14, line 5 * <br> * page 14, line 20 - page 15, line 5 * <br> ----- | 1-15 | |

**TECHNICAL FIELDS SEARCHED (IPC)**

H04W

The present search report has been drawn up for all claims

| Place of search | Date of completion of the search | Examiner |
|---|---|---|
| Munich | 12 May 2010 | Kahl, Marcus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 18 0949

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2010

| Patent document cited in search report | Publication date | Patent family member(s) | Publication date |
|---|---|---|---|
| US 2009046665 A1 | 19-02-2009 | NONE | |
| WO 2008031258 A1 | 20-03-2008 | CN 101310554 A | 19-11-2008 |

For more details about this annex : see Official Journal of the European Patent Office, No. 12/82